# EUROPEAN PATENT APPLICATION

(11) **EP 3 685 996 A1**
(43) Date of publication of application: **29.07.2020**
(21) Application number: 20151943.6
(22) Date of filing: 15.01.2020
(51) Int. Cl.: B29C 64/393, B29C 64/295

(54) **FABRICATING APPARATUS, SYSTEM, AND FABRICATING METHOD**

(30) Priority: 23.01.2019 JP 2019009590
(71) Applicant: Ricoh Company, Ltd., Tokyo 143-8555 (JP)
(72) Inventor: ARAO, Tsuyoshi, Tokyo, 143-8555 (JP); ITO, Yoichi, Tokyo, 143-8555 (JP); TAKEYAMA, Yoshinobu, Tokyo, 143-8555 (JP); TAKAI, Atsushi, Tokyo, 143-8555 (JP); KOBASHIGAWA, Shohta, Tokyo, 143-8555 (JP)
(74) Representative: SSM Sandmair

(57) **Abstract**

A fabricating apparatus (1) includes temperature measuring means (104), heating means (20), and heating controlling means (702). The temperature measuring means (104) is for measuring a temperature of a fabrication material layer. The heating means (20) is for heating the fabrication material layer. The heating controlling means (702) is for controlling the heating means (20) with a heating amount for heating the fabricating material layer to a temperature at which the fabricating material layer melts, based on the temperature measured by the temperature measuring means.

## Description

### BACKGROUND

### Technical Field

The present disclosure relates to a fabricating apparatus, a system, and a fabricating method.

### Discussion of the Background Art

Three-dimensional (3D) printers are becoming widespread as a device capable of producing many types of fabrication objects in small quantities without using dies or the like.

For example, an apparatus stacks multi-stage layers while extruding a molten resin according to fused deposition modeling (hereinafter, also referred to as fused filament fabrication (FFF)). However, in such an apparatus, fabrication may not be performed with efficient heating.

### SUMMARY

In light of the above-described problem, an object of the present disclosure is to provide a fabricating apparatus, a system, a fabricating method, and a carrier medium carrying program code that perform fabrication with efficient heating.

In an aspect of the present disclosure, there is provided a fabricating apparatus that includes temperature measuring means, heating means, and heating controlling means. The temperature measuring means is for measuring a temperature of a fabrication material layer. The heating means is for heating the fabrication material layer. The heating controlling means is for controlling the heating means with a heating amount for heating the fabricating material layer to a temperature at which the fabricating material layer melts, based on the temperature measured by the temperature measuring means.

In another aspect of the present disclosure, there is provided a system that includes the fabricating apparatus.

In still another aspect of the present disclosure, there is provided a fabricating method that includes measuring and controlling. The measuring measures a temperature of a fabrication material layer. The controlling controls heating means with a heating amount for heating the fabrication material layer to a temperature at which the fabrication material layer melts, based on the temperature measured by the measuring.

In still yet another aspect of the present disclosure, there is provided a computer readable program for controlling a fabricating apparatus to carry out the fabricating method.

That is, according to the present disclosure, a fabricating apparatus, a system, a fabricating method, and a carrier medium carrying program code that perform fabrication with efficient heating.

### BRIEF DESCRIPTION OF THE DRAWINGS

The aforementioned and other aspects, features, and advantages of the present disclosure would be better understood by reference to the following detailed description when considered in connection with the accompanying drawings, wherein:
FIG. 1 is a schematic view of a configuration of a three-dimensional fabricating apparatus according to an embodiment of the present disclosure;
FIG. 2 is a schematic view of a cross section of a discharge module in the three-dimensional fabricating apparatus of FIG. 1;
FIG. 3 is a hardware configuration diagram of the three-dimensional fabricating apparatus according to an embodiment of the present disclosure;
FIG. 4 is a schematic diagram of an example of operation of heating a lower layer;
FIG. 5 is a schematic diagram of a configuration in which a thermography is disposed as an example of a non-contact type temperature sensor;
FIG. 6 is a schematic diagram of a configuration in which a thermocouple is disposed as an example of a contact temperature sensor;
FIG. 7 is a block diagram of a heat transfer calculator;
FIG. 8 is a flowchart of a lower-layer reheating process with feedback control;
FIG. 9 is a flowchart of a lower-layer reheating process with feedforward control;
FIG. 10 is a flowchart of a lower-layer reheating process at a position downstream at a given distance from the discharge module, with feedforward control;
FIG. 11 is a flowchart of a lower-layer reheating process immediately before discharge with feedforward control;
FIG. 12 is a conceptual diagram resulting from the expression of adhesive strength at a lamination interface used for heat transfer calculation.
FIG. 13 is a plan view of a heating module according to an embodiment as seen from a fabricating table side;
FIGS. 14A to 14C are schematic views of an example of states of a fabrication object during formation of an upper layer;
FIGS. 15A to 15C are schematic views of an example of states of a fabrication object during formation of an upper layer;
FIGS. 16A to 16C are schematic views of an example of states of a fabrication object during formation of an upper layer;
FIGS. 17A to 17C are schematic views of an example of states of a fabrication object during formation of an upper layer;
FIG. 18 is a schematic view of an example of a reheat range in an embodiment of the present disclosure;
FIG. 19 is a flowchart of a fabrication process according to an embodiment of the present disclosure;
FIG. 20 is a schematic diagram of an example of an operation of heating a lower layer in an embodiment of the present disclosure;
FIG. 21 is a schematic diagram of an example of an operation of heating a lower layer in an embodiment of the present disclosure;
FIG. 22 is a schematic diagram of an example of an operation of heating a lower layer in an embodiment of the present disclosure;
FIG. 23 is a schematic diagram of an example of an operation of heating a lower layer in an embodiment of the present disclosure;
FIGS. 24A and 24B are cross-sectional views of examples of a filament in which the material composition is unevenly distributed;
FIGS. 25A and 25B are cross-sectional views of a discharged object of the filament of FIGS. 24A and 24B, respectively;
FIG. 26 is a cross-sectional view of a fabrication object to be fabricated using the filament of FIG. 24A;
FIG. 27 is a schematic diagram of an example of the three-dimensional fabricating apparatus having a restricting device;
FIG. 28 is a flowchart of an example of a process of regulating the direction of the filament;
FIG. 29 is a schematic diagram of fabrication and surface treatment operation in an embodiment of the present disclosure; and
FIG. 30 is a perspective view of the shape of a fabrication object in examples and comparative examples.

The accompanying drawings are intended to depict embodiments of the present disclosure and should not be interpreted to limit the scope thereof. The accompanying drawings are not to be considered as drawn to scale unless explicitly noted.

### DETAILED DESCRIPTION

In describing embodiments illustrated in the drawings, specific terminology is employed for the sake of clarity. However, the disclosure of this patent specification is not intended to be limited to the specific terminology so selected and it is to be understood that each specific element includes all technical equivalents that operate in a similar manner and achieve similar results.

Although the embodiments are described with technical limitations with reference to the attached drawings, such description is not intended to limit the scope of the disclosure and all of the components or elements described in the embodiments of this disclosure are not necessarily indispensable.

Referring now to the drawings, embodiments of the present disclosure are described below. In the drawings for explaining the following embodiments, the same reference codes are allocated to elements (members or components) having the same function or shape and redundant descriptions thereof are omitted below.

Hereinafter, embodiments of the present disclosure are described with reference to the drawings.

### Overall Structure

Below, a three-dimensional fabricating apparatus to fabricate a three-dimensional fabrication object by fused filament fabrication (FFF) is described as an embodiment of the present disclosure. Note that the three-dimensional printing apparatus according to the present embodiment is not limited to the apparatus using the fused filament fabrication (FFF), and may be an apparatus employing any printing method for fabricating a three-dimensional fabrication object.

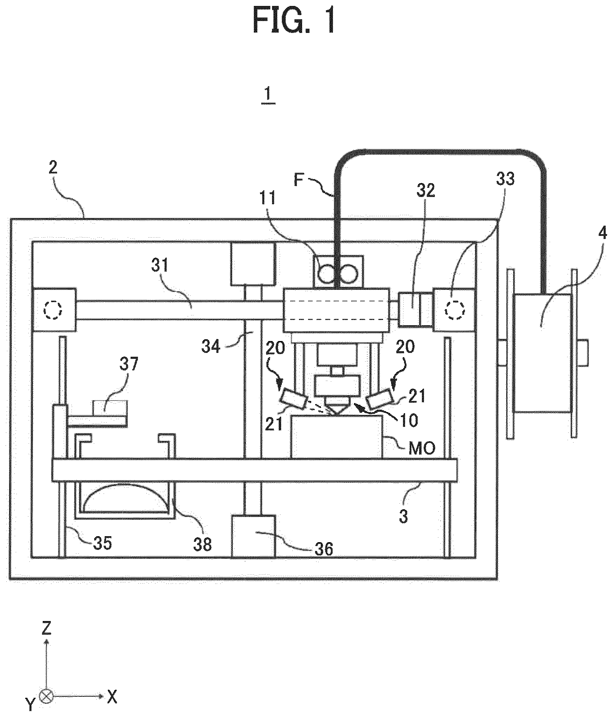

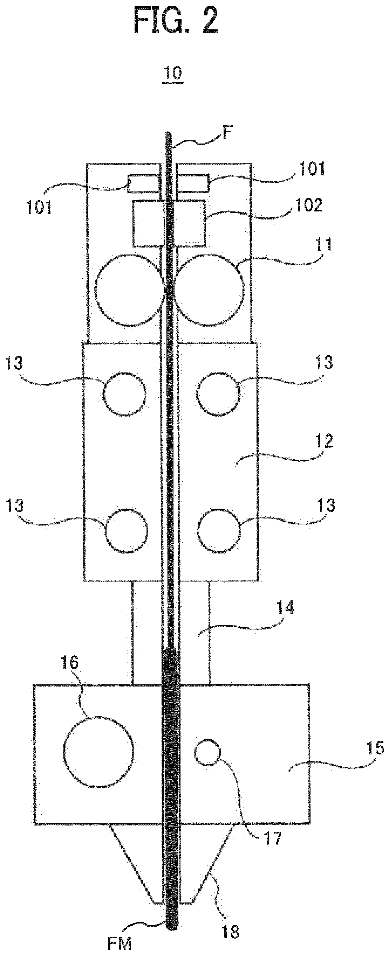

FIG. 1 is a schematic view of a configuration of a three-dimensional fabricating apparatus according to an embodiment of the present disclosure. FIG. 2 is a schematic view of a cross section of a discharge module in the three-dimensional fabricating apparatus of FIG. 1.

The interior of a housing 2 of the three-dimensional fabricating apparatus 1 is a processing space for fabricating a three-dimensional fabrication object MO. A fabricating table 3 as a mount table is disposed inside the housing 2, and the three-dimensional fabrication object MO is fabricated on the fabricating table 3.

For fabrication, a long filament F is used that is made of a resin composition using a thermoplastic resin as a matrix. The filament F is an elongated wire-shaped solid material and is set on a reel 4 outside the housing 2 of the three-dimensional fabricating apparatus 1 in a wound state. The reel 4 is pulled by the rotation of an extruder 11, which is a drive device or drive means of the filament F, to rotate without greatly exerting a resistance force.

A discharge module 10 (fabrication head) as a fabrication material discharger is disposed above the fabricating table 3 inside the housing 2. The discharge module 10 is modularized by the extruder 11, a cooling block 12, a filament guide 14, a heating block 15, a discharge nozzle 18, image pickup modules 101, a torsional rotation assembly 102, and other components. The filament F is drawn in by the extruder 11 and supplied to the discharge module 10 of the three-dimensional fabricating apparatus 1.

The image pickup modules 101 pick up a 360° image of the filament F drawn into the discharge module 10, that is, an omnidirectional image of a certain part of the filament F. Here, a cross section of the discharge module 10 will be described with reference to FIG. 2. Two image pickup modules 101 are disposed in the discharge module 10 of FIG. 2. In some embodiments, a 360° image of the filament F may be picked up by one image pickup module 101, for example, by using a reflection plate. Examples of the image pickup module 101 include a camera including an imaging optical system, such as a lens, and an imaging device, such as a charge coupled device (CCD) sensor and a complementary metal oxide semiconductor (CMOS) sensor.

The torsional rotation assembly 102 includes rollers and regulates a direction of the filament F by rotating the filament F drawn into the discharge module 10 in a width direction. A diameter measuring unit 103 measures a width between edges of the filament F in two directions of X axis and Y axis as a diameter, from an image of the filament F picked up by the image pickup modules 101, and outputs error information in response to detection of an outsize diameter. The output destination of the error information may be a display, a speaker, or another device. The diameter measuring unit 103 may be a circuit or a function realized by the processing of a central processing unit (CPU).

The heating block 15 includes heat sources 16, such as heaters, and a thermocouple 17 to control the temperature of the heat sources 16. The heating block 15 heats and melts the filament F supplied to the discharge module 10 via a transfer path, and supplies the melted filament F to a discharge nozzle 18.

The cooling block 12 is disposed above the heating block 15. The cooling block 12 includes cooling sources 13 and cools the filament F. Accordingly, the cooling block 12 prevents a reverse flow of a melted filament FM to an upper part in the discharge module 10, an increase in resistance in pushing out the filament, or clogging in the transfer path due to solidification of the filament. A filament guide 14 is provided between the heating block 15 and the cooling block 12.

As illustrated in FIG. 2, the discharge nozzle 18 to discharge the filament F, which is a fabrication material, is disposed at a lower end portion of the discharge module 10. The discharge nozzle 18 discharges a melted or semi-melted filament FM supplied from the heating block 15 to linearly extrude the melted or semi-melted filament FM onto the fabricating table 3. The discharged filament FM is cooled and solidified to form a layer having a predetermined shape. The discharge nozzle 18 repeats the operation of discharging the melted or semi-melted filament FM to linearly extrude the filament FM onto the formed layer, thus laminating a new layer on the formed layer. Thus, a three-dimensional object is obtained.

In the present embodiment, two discharge nozzles are disposed in the discharge module 10. A first discharge nozzle fuses and discharges a filament of a model material constituting a three-dimensional fabrication object, and a second discharge nozzle fuses and discharges a filament of a support material to support the model material. In FIG. 1, the second discharge nozzle is disposed on a rear side of the first discharge nozzle (the discharge nozzle 18). Note that the number of discharge nozzles is not limited to two and may be any other suitable number.

The support material discharged from the second discharge nozzle is typically a material different from the model material constituting the three-dimensional fabrication object. A support portion formed of the support material is finally removed from a model portion formed of the model material. The filament of the support material and he filament of the model material are separately melted in the heating block 15, are discharged so as to be extruded from the respective discharge nozzles 18, and are sequentially laminated in layers.

The three-dimensional fabricating apparatus 1 includes heating modules 20 to heat a lower layer below a layer being formed by the discharge module 10. Each heating module 20 includes a laser source 21 that emits a laser. The laser source 21 emits the laser to a position in the lower layer immediately downstream from a position to which the filament FM is discharged. The laser source is not particularly limited but may be, for example, a semiconductor laser. The emission wavelength of the laser may be, for example, 445 nm.

The discharge module 10 and the heating module 20 are slidably held by a connecting member with respect to an X-axis drive shaft 31 (an X-axis direction) extending in a lateral direction (a horizontal direction in FIG. 1, that is, the X-axis direction) of the three-dimensional fabricating apparatus 1. The discharge module 10 is movable in the lateral direction (X-axis direction) of the three-dimensional fabricating apparatus 1 by the driving force of the X-axis drive motor 32.

The X-axis drive motor 32 is held slidably along a Y-axis drive shaft (Y-axis direction) extending in a device front-back direction (a depth direction in FIG. 1, that is, the Y-axis direction). The X-axis drive shaft 31 moves together with the X-axis drive motor 32 along the Y-axis direction by the driving force of a Y-axis drive motor 33, thus moving the discharge module 10 and the heating module 20 in the Y-axis direction.

Meanwhile, the fabricating table 3 is passed through by a Z-axis drive shaft 34 and a guide shaft 35 and is held to be movable along the Z-axis drive shaft 34 extending in a vertical direction (up-down direction in FIG. 1, that is, Z-axis direction) of the three-dimensional fabricating apparatus 1. The fabricating table 3 moves in the vertical direction (Z-axis direction) of the three-dimensional fabricating apparatus 1 by the driving force of the Z-axis drive motor 36. The fabricating table 3 may be provided with a heating section to heat the fabrication object mounted on the fabricating table 3.

When the melting and discharging of the filament continue over time, a peripheral portion of the discharge nozzle 18 may be contaminated with melted resin. On the other hand, a cleaning brush 37 of the three-dimensional fabricating apparatus 1 regularly performs a cleaning operation on the peripheral portion of the discharge nozzle 18 to prevent the resin from sticking to a tip of the discharge nozzle 18. From the viewpoint of prevention of sticking, it is preferable that the cleaning operation be performed before the temperature of the resin is fully lowered. In such a case, the cleaning brush 37 is preferably made of a heat resistant member. Abrasive powder generated during the cleaning operation may be accumulated in a dust box 38 of the three-dimensional fabricating apparatus 1 and regularly discarded from the dust box 38, or may be discharged to the outside via a suction path of the three-dimensional fabricating apparatus 1.

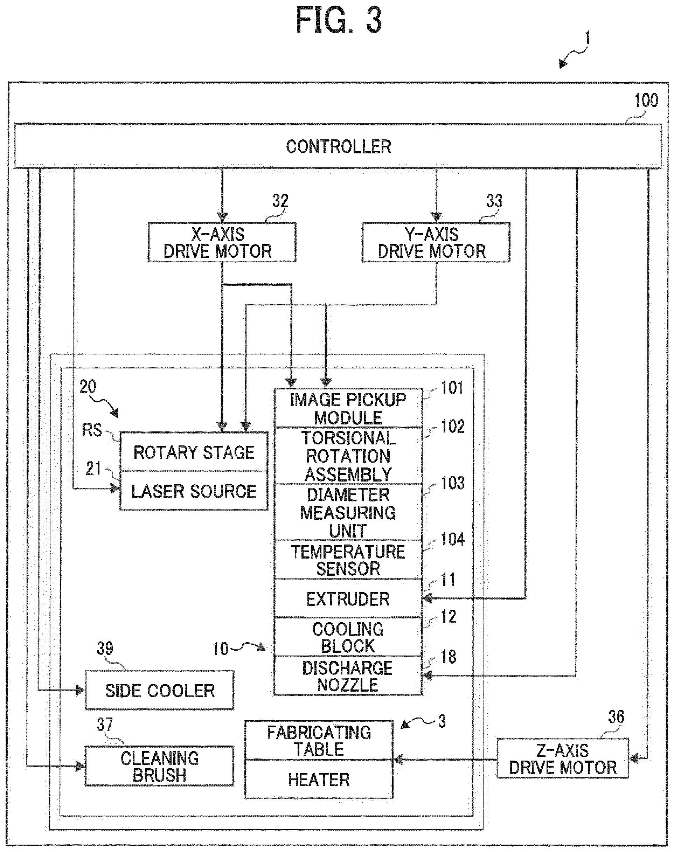

FIG. 3 is a hardware configuration diagram of the three-dimensional fabricating apparatus according to an embodiment of the present disclosure. The three-dimensional fabricating apparatus 1 illustrated in FIG. 3 includes a controller 100. The controller 100 is constructed by a central processing unit (CPU) or a circuit and is electrically connected to respective components as illustrated in FIG. 3.

The three-dimensional fabricating apparatus 1 is disposed with an X-axis coordinate detection mechanism to detect the position of the discharge module 10 in the X-axis direction. The detection result of the X-axis coordinate detection mechanism is sent to the controller 100. The controller 100 controls the driving of the X-axis drive motor 32 according to the detection result, and moves the discharge module 10 to a target position in the X-axis direction.

The three-dimensional fabricating apparatus 1 is disposed with an Y-axis coordinate detection mechanism to detect the position of the discharge module 10 in the Y-axis direction. The detection result of the Y-axis coordinate detection mechanism is sent to the controller 100. The controller 100 controls the driving of the Y-axis drive motor 33 according to the detection result and moves the discharge module 10 to a target position in the Y-axis direction.

The three-dimensional fabricating apparatus 1 is disposed with a Z-axis coordinate detection mechanism to detect the position of the fabricating table 3 in the Z-axis direction. The detection result of the Z-axis coordinate detection mechanism is sent to the controller 100. The controller 100 controls the driving of the Z-axis drive motor 36 according to the detection result and moves the fabricating table 3 to a target position in the Z-axis direction.

In such a manner, the controller 100 controls the movement of the discharge module 10 and the fabricating table 3 to move the relative three-dimensional positions of the discharge module 10 and the fabricating table 3 to the target three-dimensional positions.

The controller 100 sends control signals to drivers of the extruder 11, the cooling block 12, the discharge nozzle 18, the laser source 21, the cleaning brush 37, a rotary stage RS, the image pickup module 101, the torsional rotation assembly 102, the diameter measuring unit 103, and the temperature sensor 104 to control the driving of each of the extruder 11, the cooling block 12, the discharge nozzle 18, the laser source 21, the cleaning brush 37, the rotary stage RS, the image pickup module 101, the torsional rotation assembly 102, the diameter measuring unit 103, and the temperature sensor 104. The rotary stage RS, a side cooler 39, the image pickup module 101, the torsional rotation assembly 102, the diameter measuring unit 103, and the temperature sensor 104 are described later.

### Heating method

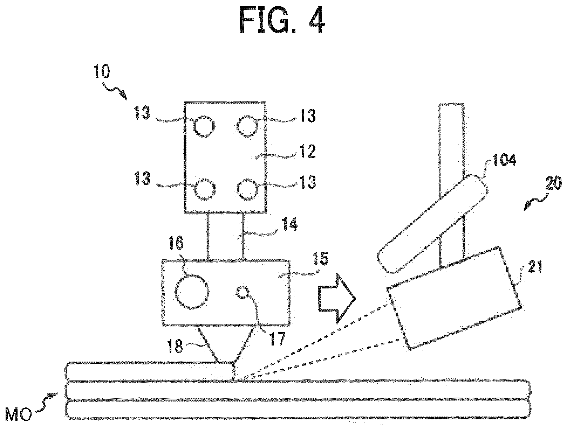

FIG. 4 is a schematic diagram of an example of operation of heating a lower layer. Hereinafter, a method of heating with a laser is described as one embodiment.

During the fabrication of an upper layer by the discharge module 10, the laser source 21 emits the laser to a position just ahead of a position of a lower layer to which the filament FM is discharged, in a direction of movement of the discharge module 10. The term "reheating" refers to heating again after the melted filament FM has cooled and solidified. The reheating temperature is not particularly limited, but it is preferable that it is not lower than the temperature at which the filament FM of a lower layer melts. In the following description, the reheating at or above the temperature at which the filament FM of a lower layer melts may be referred to as remelting.

The temperature of the lower layer before heating is sensed by the temperature sensor 104 as a measuring device or measuring means. The position of the temperature sensor 104 is arranged at any position at which the temperature sensor 104 can sense the surface of the lower layer before heating. For the present embodiment, in FIG. 4, the temperature sensor 104 is disposed vertically above the laser source 21. The three-dimensional fabricating apparatus 1 senses the temperature of the lower layer before heating by the temperature sensor 104 and adjusts the output of the laser according to the sensing result, thus allowing the lower layer to be reheated to a predetermined temperature or higher. As another method, the temperature of the lower layer during reheating may be sensed with the temperature sensor 104, and energy may be input from the laser to the lower layer until the sensing result becomes equal to or higher than a threshold temperature. In such a case, the position of the temperature sensor 104 is arranged at a position at which the temperature sensor 104 can sense the surface to be heated. Any known device may be used as the temperature sensor 104 and may be either a contact type or a non-contact type. The temperature sensor 104 is not particularly limited, and for example, a thermography, a radiation thermometer, or a thermocouple can be used. In some embodiments, a plurality of temperature sensors may be included.

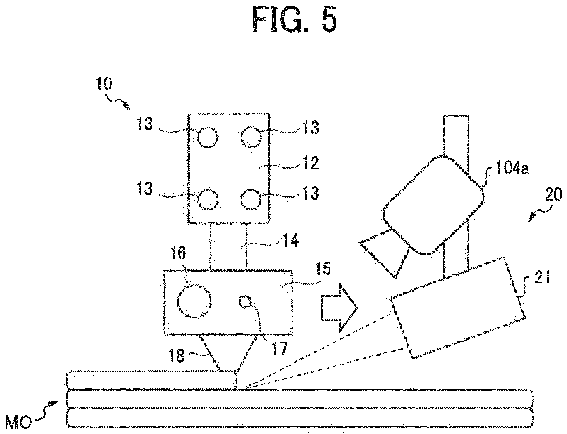

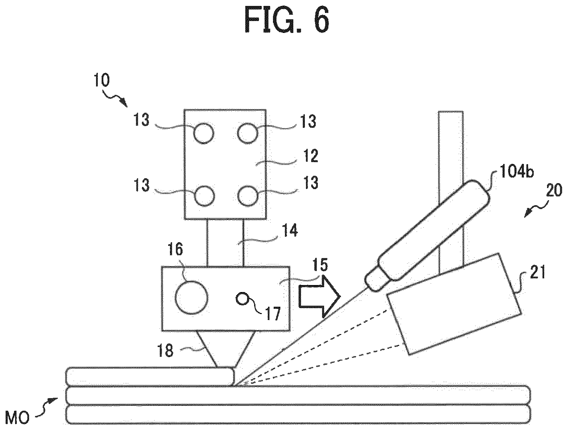

FIG. 5 is a schematic diagram of a configuration in which a thermography 104a is disposed as an example of a non-contact type temperature sensor. FIG. 6 is a schematic diagram of a configuration in which a thermocouple 104b is disposed as an example of a contact temperature sensor. Note that the non-contact temperature sensor and the contact temperature sensor may be temperature sensors other than the thermography 104a and the thermocouple 104b.

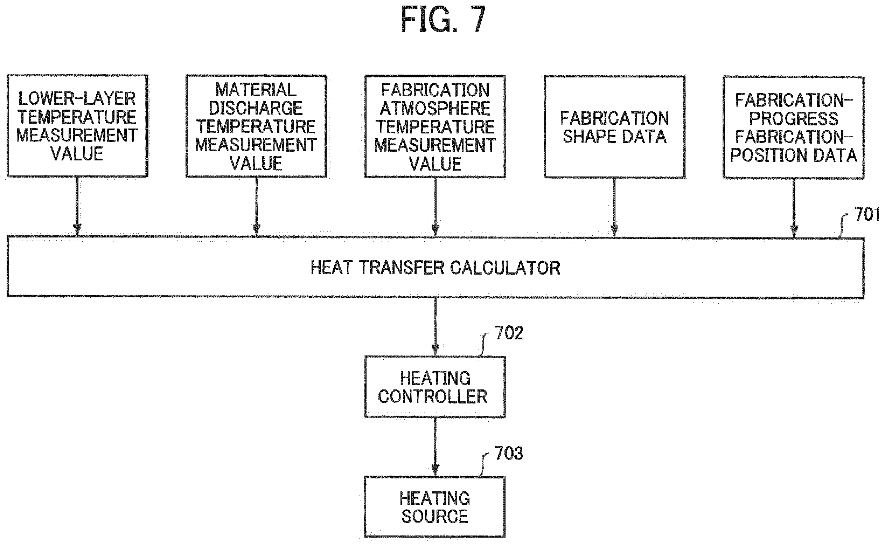

FIG. 7 is a block diagram of a heat transfer calculator. The heat transfer calculator 701 receives, as a calculation unit or calculating means, measured values of, for example, lower layer temperature, material discharge temperature, and fabricating atmosphere temperature output by various temperature sensors. This is because the amount of heat required for reheating the lower layer can vary depending on the conditions of the lower layer temperature, material discharge temperature, and fabricating atmosphere temperature.

The heat transfer calculator 701 receives data of a fabricating shape of a three-dimensional model and data indicating a fabricating position during fabrication. Since the three-dimensional fabrication object has different heat capacities depending on the shape to be fabricated and the fabricating position, the amount of heat required for reheating the lower layer varies. Therefore, for example, based on the fabricating shape data of the three-dimensional model, the heating amount is controlled to different values depending on whether the shape is thin or thick. Further, for example, based on the data indicating the fabricating position, the heating amount is controlled to be different values between during fabrication of an end surface and during fabrication of a center portion.

The heat transfer calculator 701 calculates the amount of heat absorbed by the lower layer based on various types of input information to calculate data on the heating amount required for reheating the lower layer. The heating data calculated by the heat transfer calculator 701 is output to a heating controller 702. The heating controller 702 controls a heating source 703 based on the heating data received from the heat transfer calculator 701 and reheats the lower layer.

Reheating the surface of the lower layer reduces the temperature difference between the lower layer and the filament FM discharged onto the surface of the lower layer and mixes the lower layer and the discharged filaments, thus enhancing the adhesiveness in the lamination direction. In particular, controlling the heating with appropriate heat energy calculated by the heat transfer calculator 701 can enhance the strength of the lamination interface without altering the three-dimensional fabrication object.

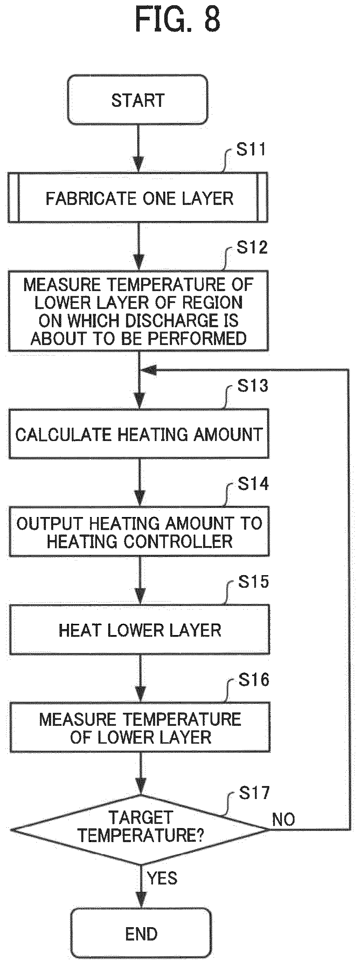

FIG. 8 is a flowchart of a lower-layer reheating process with feedback control. In the process of the flowchart illustrated in FIG. 8, when one fabrication layer is fabricated and an upper layer is fabricated on the one fabrication layer, the temperature of a region onto which the filament is almost about to be discharged is measured with a temperature sensor.

The controller 100 controls the discharge module 10 based on the data of a three-dimensional model and performs fabrication of one layer (step S11). Note that the layer formed here may also be referred to as a "lower layer". After performing the fabrication of the lower layer, the process proceeds to a reheating process for further stacking a layer on the lower layer in step S12 and subsequent steps.

The temperature sensor 104 measures the temperature of a region of the lower layer onto which the discharge module 10 is almost about to discharge the melted filament FM (step S12). The heat transfer calculator 701 acquires the measured temperature data and calculates a heating amount necessary for reheating the lower layer (step S13). The heating amount in step S13 may be calculated in consideration of, for example, the material discharge temperature, the fabricating atmosphere temperature, the shape data, and the fabricating position.

The heat transfer calculator 701 outputs the calculated heating amount to the heating controller 702 (step S14). The heating controller 702 controls the heating source 703 based on the acquired heating amount data and reheats the lower layer (step S15). After reheating the lower layer, the temperature sensor 104 measures the temperature of the lower layer again (step S16).

If the measured temperature has reached the target temperature in step S16, the reheating process ends (YES in step S17). If the measured temperature has not reached the target temperature in step S16, the process returns to step S13, the heating amount is calculated again, and the heating amount is controlled (NO in step S17). Note that the target temperature is not particularly limited but is a temperature at which the filament FM of the lower layer melts to such an extent that the lower layer does not deform.

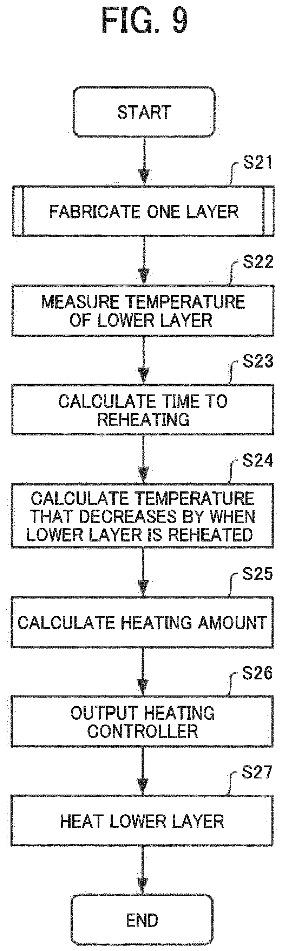

FIG. 9 is a flowchart of a lower-layer reheating process with feedforward control. In the process of the flowchart illustrated in FIG. 9, when one fabrication layer is fabricated and an upper layer is fabricated on the one fabrication layer, the temperature that falls before reheating is calculated and the heating amount is controlled.

The controller 100 controls the discharge module 10 based on the data of a three-dimensional model and performs fabrication of one layer (step S21). Thereafter, the temperature sensor 104 measures the temperature of the lower layer (step S22).

The heat transfer calculator 701 acquires the measured temperature data and calculates the time from when the temperature of the lower layer is measured until the lower layer is reheated (step S23). Thereafter, the heat transfer calculator 701 calculates a temperature that decreases by when the lower layer is reheated based on the time needed until the reheating, which is calculated in step S23 (step S24).

The heat transfer calculator 701 also calculates a heating amount necessary for reheating the lower layer based on the measured temperature data and a temperature decrease over time (step S25). In the processing in steps S23 to S25, calculation may be performed taking into account the material discharge temperature, the fabricating atmosphere temperature, the shape data, the fabricating position, and the like.

The heat transfer calculator 701 outputs the calculated heating amount to the heating controller 702 (step S26). The heating controller 702 controls the heating source 703 based on the acquired heating amount data and reheats the lower layer (step S27). After reheating the lower layer, the process is terminated.

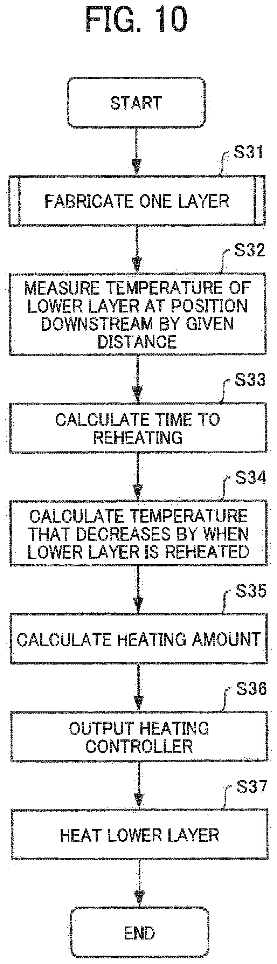

FIG. 10 is a flowchart of a lower-layer reheating process at a position downstream at a given distance from the discharge module, with feedforward control. In the process of the flowchart illustrated in FIG. 10, the processing of measuring the temperature of a lower layer at a position downstream by a given distance from the discharge module is performed instead of the processing of step S22 in the flowchart of FIG. 9. That is, in the process of the flowchart illustrated in FIG. 10, after fabricating one fabrication layer (step S31), the temperature of the lower layer is measured at a given position downstream in a traveling direction of the discharge module 10 (step S32). Thereafter, the same processing as in steps S23 to S27 is performed (steps S33 to S37).

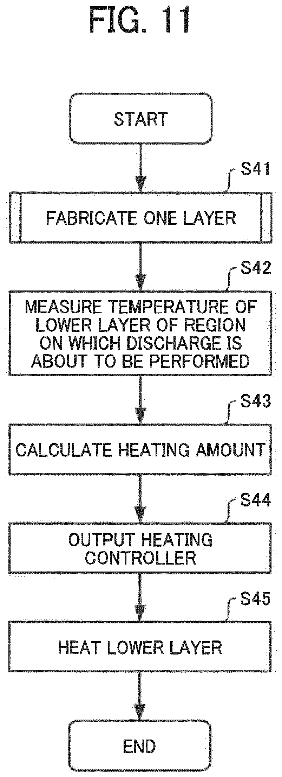

FIG. 11 is a flowchart of a lower-layer reheating process immediately before discharge with feedforward control. In the process of the flowchart illustrated in FIG. 11, the feed-forward control is performed without performing the processing of steps S16 and S17 in the flowchart of FIG. 8. Therefore, the processing in steps S41 to S45 in FIG. 11 is the same as the processing in steps S11 to S15 in FIG. 8.

The controller 100 controls the discharge module 10 based on the data of a three-dimensional model and performs fabrication of one layer (step S11). The temperature sensor 104 measures the temperature of a region of the lower layer onto which the discharge module 10 is almost about to discharge the melted filament FM (step S42). The heat transfer calculator 701 acquires the measured temperature data and calculates a heating amount necessary for reheating the lower layer (step S43).

The heat transfer calculator 701 outputs the calculated heating amount to the heating controller 702 (step S44). The heating controller 702 controls the heating source 703 based on the acquired heating amount data and reheats the lower layer (step S45). After reheating the lower layer, the three-dimensional fabricating apparatus 1 ends the lower layer reheating process with feedforward control.

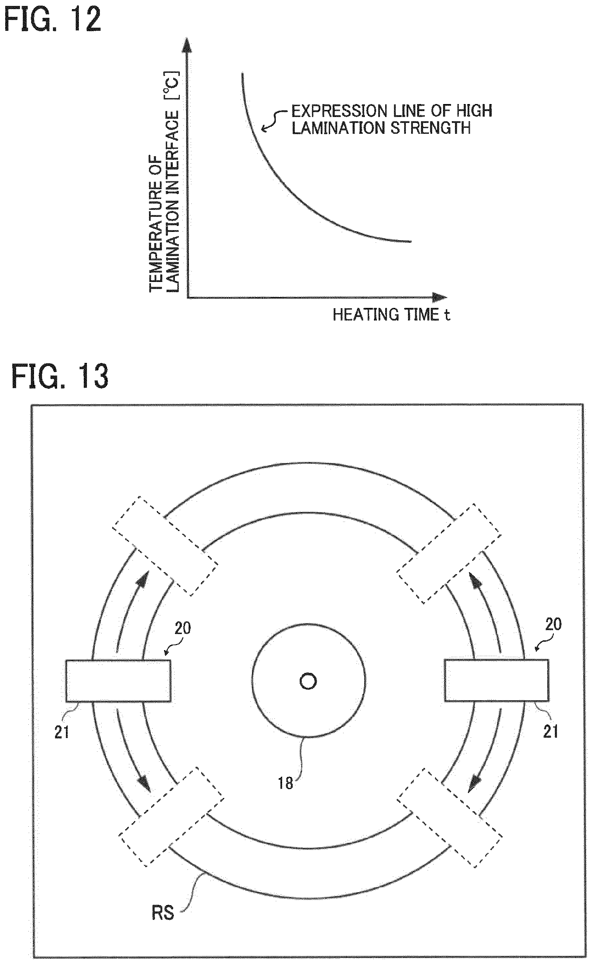

FIG. 12 is a conceptual diagram resulting from the expression of adhesive strength at a lamination interface used for heat transfer calculation. Examples of parameters resulting from the expression of high lamination strength include, but not limited to, lamination interface temperature and heating time. When the lamination interface temperature is equal to or higher than the glass transition point and heated for a predetermined time or more, resins at the lamination interface are mixed together and the lamination interface strength can be enhanced. That is, when the relationship between the lamination interface temperature and the heating time exceeds the expression line of high lamination strength, a high strength lamination interface appears.

The heat transfer calculator 701 calculates the heating amount so as to exceed the expression line of high lamination strength in the conceptual diagram illustrated in FIG. 12.

FIG. 13 is a plan view of the heating module according to an embodiment as seen from a side on which the fabricating table 3 is disposed. In FIG. 13, the heating module 20 is attached to the rotary stage RS. The rotary stage RS rotates about the discharge nozzle 18. The laser source 21 rotates with the rotation of the rotary stage RS. Thus, even when the direction of movement of the discharge nozzle 18 is changed, the laser source 21 can emit the laser light ahead of the discharge position of the discharge nozzle 18.

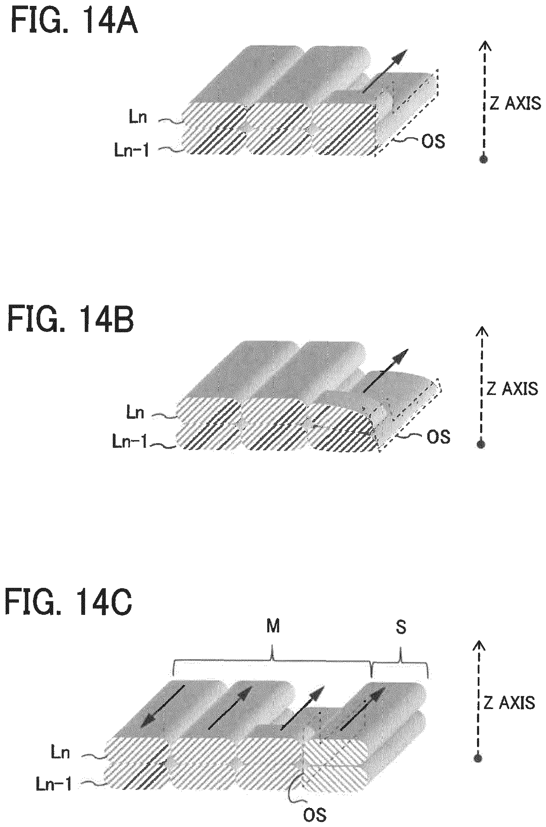

FIGS. 14A to 14C are schematic diagrams of a state of the fabrication object during formation of the upper layer. Hereinafter, a layer under fabrication by the discharge module 10 is referred to as an upper layer Ln, a layer below the layer under fabrication is referred to as a lower layer Ln-1, and a layer below the lower layer Ln-1 is referred to as a lower layer Ln-2. Solid line arrows in FIGS. 14A to 17C indicate movement paths (tool paths) of the discharge module. In FIGS. 14A to 17C, the discharged filaments are depicted by elliptic cylinders so that the tool paths of the discharge module can be seen. Therefore, in FIGS. 14A to 17C, voids are formed between the filaments and the filaments. However, actually, it is preferable to fabricate layers without voids from the viewpoint of strength.

FIG. 14A is a schematic view of a fabrication object when an upper layer is formed without reheating a lower layer. The discharge nozzle 18 moves in a direction indicated by a solid arrow in FIGS. 14A to 14C to form a fabrication object. When the upper layer Ln is formed without reheating the lower layer Ln-1, the upper layer Ln can be formed in a state in which the lower layer Ln-1 is solidified, thus preventing deformation of an outer surface OS. However, in such a case, sufficient adhesion strength cannot be obtained (in an adhesion surface AS) between the upper layer Ln and the lower layer Ln-1.

FIG. 14B is a schematic view of a fabrication object when the upper layer is formed while the lower layer is reheated. When the upper layer Ln is formed while the lower layer Ln-1 is reheated, the outer surface OS deforms because the upper layer Ln can be formed in a state in which the lower layer Ln-1 is melted, although adhesiveness is obtained.

FIG. 14C is a schematic view of a fabrication object when the upper layer is formed while the lower layer is reheated. In the example of FIG. 14C, even if the upper layer Ln is formed while the lower layer Ln-1 of the model part M is reheated, adhesiveness is obtained and a model part M can be supported by a support part S. Accordingly, the outer surface OS of the model part M is not deformed.

In the present embodiment, the upper layer Ln layer is formed in a state in which the lower layer Ln-1 is partially remelted. Accordingly, entanglement of polymers between the upper layer Ln and the lower layer Ln-1 is promoted, thus enhancing the strength of the fabrication object. In addition, appropriate setting of the conditions for remelting can achieve both of the accuracy of shape and the strength of the model part M in the lamination direction. Hereinafter, a setting example of a remelted region and an effect of setting of the remelted region in the present embodiment is described below.

A model material and a support material may be the same material or may be different. For example, even when the model part M and the support part S are made of the same material, controlling the strength of the interface allows separation of the model part M and the support part S after fabrication.

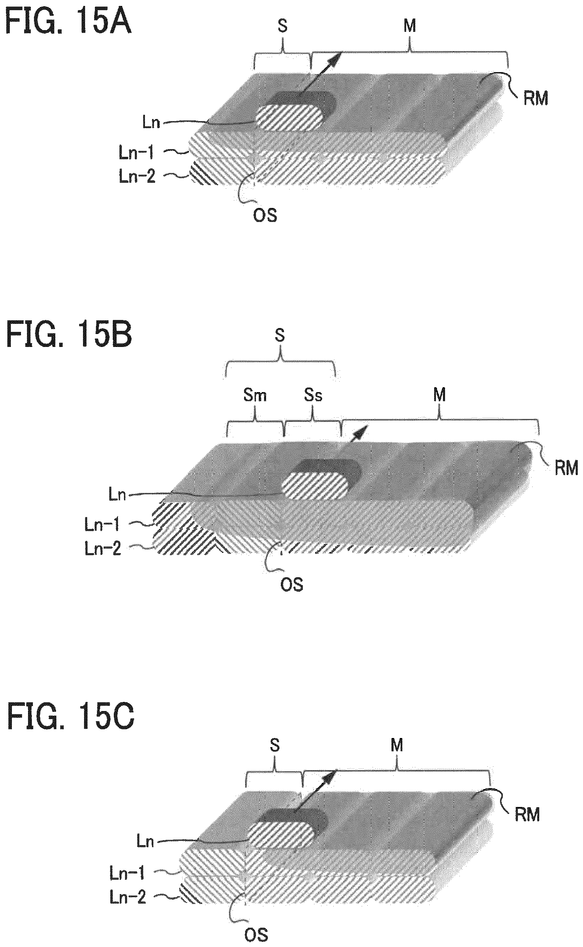

FIGS. 15A to 15C are schematic diagrams of a state of the fabrication object during formation of the upper layer. In a fabrication method of FIG. 15A, the three-dimensional fabricating apparatus 1 reheats a surface of the model part M in the lower layer Ln-1 and a surface except for an outer peripheral portion of the support part S to form a remelted part RM, thus forming the upper layer Ln. According to the method of FIG. 15A, a region on the outer surface OS side of the model part M is remelted and fabricated, thus enhancing the adhesion between the layers and the strength in the lamination direction. In addition, by melting the outer surface OS side, separation between the support part S and the model part M during fabricating is less likely to occur, and the accuracy of fabrication is enhanced. However, if the adhesion between the support part S and the model part M becomes too high, the releasability of the support part S after fabrication is reduced. Furthermore, depending on the heating temperature, the strength of the model part M may decrease due to the mixing of the support part S in the model part M. Mixing of materials can be prevented by using a method of heating a laminated surface in non-contact with the laminated surface or by devising the movement of a contact member or cleaning the contact member in a method of heating a laminated surface with the contact member contacting the laminated surface. The releasability of the support part S can be enhanced by using, as the support material, a material that is different from the model material and has a melting point lower than a melting point of the model material.

In the fabrication method of FIG. 15B, the three-dimensional fabricating apparatus 1 forms the support part S with a model material and a support material. In such a case, in the three-dimensional fabricating apparatus 1, the support material is disposed in a region Ss on the side of the model part M in the support part S and the model material is disposed in a region Sm on the outer peripheral side in the support part S. In such a case, the three-dimensional fabricating apparatus 1 may perform fabrication by forming the model part M and the region Sm in the support part S with the model material and subsequently casting the support material in a gap of the model material. Subsequently, the three-dimensional fabricating apparatus 1 forms the upper layer Ln while reheating the surface of the model part M in the lower layer Ln-1 and the surface except for the outer peripheral portion of the support part S.

The fabrication method of FIG. 15B is suitable when the releasability of the support part S is excellent. Further, the fabrication method of FIG. 15B is preferable in that, even when the shape accuracy and the structural strength of the region Ss are low, the region Sm supports the region Ss and compensates for the shape accuracy and the strength of the region Ss.

In the fabrication method of FIG. 15C, the three-dimensional fabricating apparatus 1 forms the upper layer Ln while reheating a surface of the model part M excluding the vicinity of the outer surface OS. According to the fabrication method of FIG. 15C, the heat of the model part M is unlikely to be transmitted to the support part S at remelting, thus stabilizing the shape of the support part S. The fabrication method of FIG. 15C is effective in that the shape of the model part M is easily maintained and the releasability between the model part M and the support part S is easily secured. However, in the fabrication method of FIG. 15C, the strength in the lamination direction is weaker than in a fabrication method of remelting the entire surface of the model part M. Therefore, the fabrication method of FIG. 15C is effective in a case of fabricating a fabrication object having a strong internal structure or a case in which fabrication accuracy and releasability are prioritized.

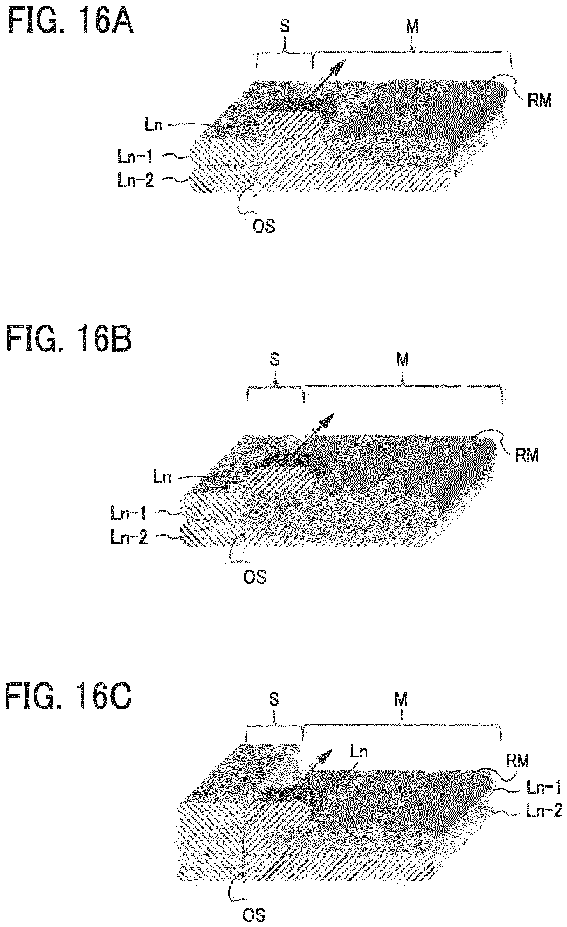

FIGS. 16A to 16C are schematic diagrams of a state of the fabrication object during formation of the upper layer. The fabrication method of FIG. 16A is different from the fabrication method of FIG. 15C in that the non-remelted region on the surface of the model part M is expanded to a position farther away from the outer surface OS and the remelted part RM is reduced. According to the fabrication method of FIG. 16A, the shape of the support part S is more stabilized than the fabrication method of FIG. 15C. Therefore, the fabrication method of FIG. 16A is more effective than the fabrication method of FIG. 15C in that the shape of the model part M can be maintained. However, for the fabrication method of FIG. 16A, the intensity of the model part M in the lamination direction is lower than the fabrication method of FIG. 15C.

The fabrication method in FIG. 16B is different from the fabrication method in FIG. 15C in that the surface of the lower layer Ln-1 is reheated to the vicinity of the outer surface OS in the model part M. The fabrication method of FIG. 16B is effective in a case in which the melting point of the support material is higher than the melting point of the model material. According to the fabrication method of FIG. 16B, the strength of the model part M in the lamination direction is greater than the strength of the fabrication method of FIG. 15C.

In the fabrication method of FIG. 16C, the three-dimensional fabricating apparatus 1 first discharges the support material of the upper layer Ln to form the support part S and then remelts the model part M of the lower layer Ln-1 to form the model part M of the upper layer Ln. Since the support part S is finally removed after fabrication, it is sufficient that the support part S has a strength enough to prevent peeling-off during fabrication, so that the strength as high as the strength of the model material is not required. Therefore, as the support material, it is preferable to select a material capable of being laminated with higher accuracy than the model material. The fabrication accuracy of the support part S is enhanced by forming the support part S of the upper layer Ln in a state in which the lower layer Ln-1 is solidified. According to the fabrication method of FIG. 16C, the support part S and the model part M are formed independently of each other. Thus, the three-dimensional fabricating apparatus 1 can form the support section S at a finer lamination pitch than a lamination pitch of the model part M. For example, in the configuration of FIG. 16C, the lamination pitch of the support part S is half of the lamination pitch of the model part M. Since the melted model material conforms to the shape of the support part S, the outer surface OS of the model part M becomes smoother by reducing the lamination pitch of the support part S. The method of FIG. 16C is preferable in a case in which the support part S can be fabricated more accurately than the model part M.

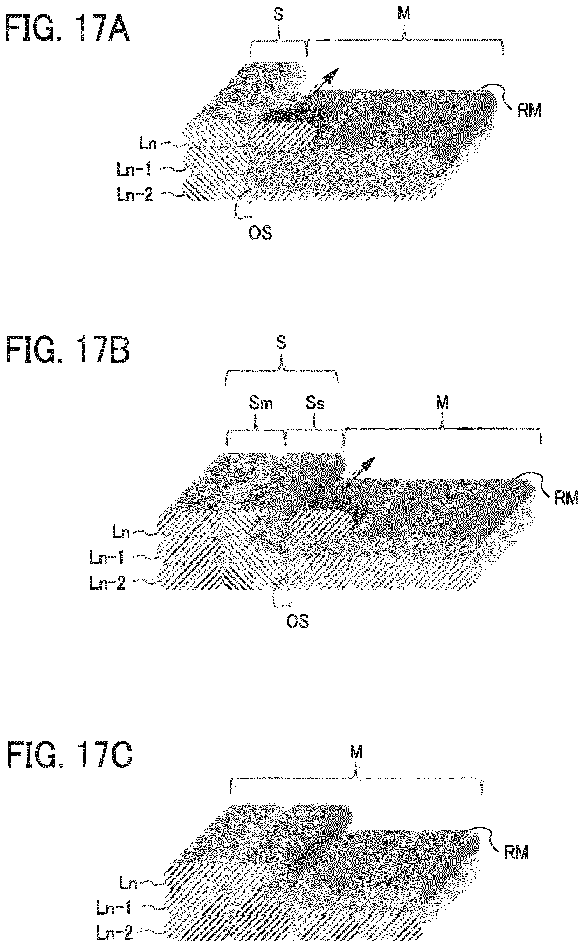

FIGS. 17A to 17C are schematic diagrams of a state of the fabrication object during formation of the upper layer. The fabrication method of FIG. 17A is different from the fabrication method of FIG. 16B in that the support part S of the upper layer Ln is first formed and then the model part M of the upper layer Ln is formed. When the melting point of the support material is higher than the melting point of the model material, the support part S does not melt even if the vicinity of the outer surface OS of the model part M is heated. According to the fabrication method of FIG. 17A, a fabrication object having excellent releasability and high strength in the lamination direction can be obtained, thus enhancing the fabrication accuracy.

The fabrication method of FIG. 17B is different from the fabrication method of FIG. 15B in that the support part S of the upper layer Ln is first formed and then the model part M of the upper layer Ln is formed. According to the method of FIG. 17B, even when the shape accuracy and the structural strength of the region Ss are low, the region Sm supports the region Ss and compensates for the shape accuracy and the structural strength of the region Ss. However, according to the fabrication method of FIG. 17B, when the region Ss melts at remelting, the releasability of the support part S may be reduced.

The fabrication method of FIG. 17C is different from the fabrication method of FIG. 16A in that the outer peripheral side of the model part M in the upper layer Ln is first formed and then the remaining part of the model part M in the upper layer is formed. According to the fabrication method of FIG. 17C, an object is fabricated only with the model part M, thus stabilizing the shape and enhancing the fabrication accuracy. In addition, the object is fabricated while a portion of the side surface of the model part M in the upper layer Ln is remelted, thus enhancing the strength of the model part M.

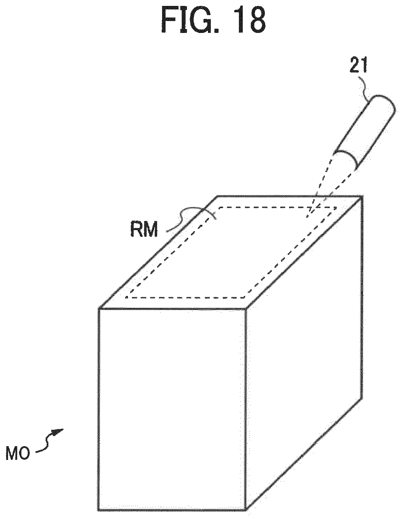

FIG. 18 is a schematic view of an example of a reheat range in the present embodiment. To maintain the outer shape, the three-dimensional fabricating apparatus 1 intentionally narrows the remelted portion RM without reheating the outer peripheral portion of the three-dimensional fabrication object MO, thus enhancing the adhesion between layers while maintaining the shape of the fabrication object.

### Process and Operation

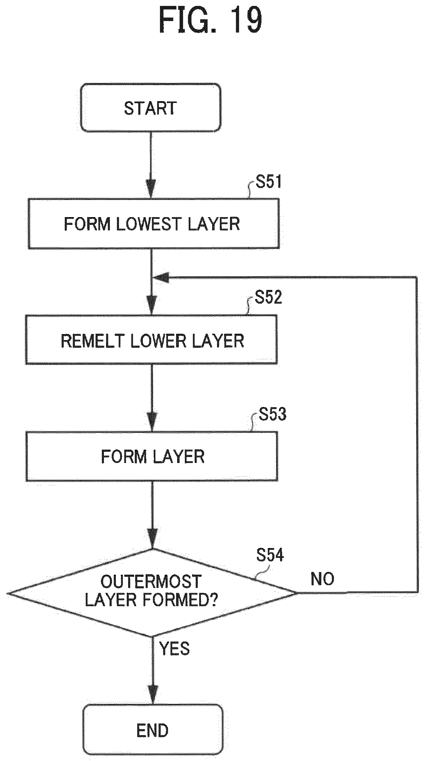

Subsequently, the processing and operation of the three-dimensional fabricating apparatus 1 in one embodiment is described below. FIG. 19 is a flowchart of a fabrication process according to an embodiment.

The controller 100 of the three-dimensional fabricating apparatus 1 accepts input of data of a three-dimensional model. The data of the three-dimensional model is constructed by image data of each layer obtained when the three-dimensional model is sliced at predetermined intervals.

The controller 100 of the three-dimensional fabricating apparatus 1 drives the X-axis drive motor 32 or the Y-axis drive motor 33 to move the discharge module 10 in the X-axis direction or the Y-axis direction. While the discharge module 10 is moving, the controller 100 causes the discharge nozzle 18 to discharge melted or semi-melted filament FM to the fabricating table 3 according to image data of a lowest layer among the input data of the three-dimensional model. Thus, the three-dimensional fabricating apparatus 1 forms, on the fabricating table 3, a layer having a shape based on the image data (step S51).

While the discharge module 10 is moving, the controller 100 causes the laser source 21 to emit a laser based on image data of the lowest layer of layers that have not been fabricated in the input data of the three-dimensional model. Accordingly, a position in the lower layer to which the laser is emitted is remelted (step S52). Note that the controller 100 may causes the laser source 21 to emit the laser inside a range indicated by the image data as in the fabrication methods of FIG.15C, FIGS. 16A and 16C, and FIG. 17C. Alternatively, the controller 100 may emit the laser beyond the range indicated by the image data as in the fabrication methods of FIGS. 15A, 15B, and 17B. The heating temperature of a lower layer in step S52 is controlled to be equal to or higher than the melting temperature of the filament.

While the discharge module 10 is moving, the controller 100 causes the discharge nozzle 18 to discharge the filament FM to a lower layer on the fabricating table 3 according to the image data of the lowest layer of the layers that have not been fabricated, among the data of the input three-dimensional model. Accordingly, a layer having a shape corresponding to the image data is formed on the lower layer (step S53). At this time, since the lower layer is remelted, the adhesion of the interface between the layer to be fabricated and the lower layer is enhanced.

Note that the process of remelting the lower layer in step S52 and the process of forming the layer in step S53 may be overlapped. In such a case, the three-dimensional fabricating apparatus 1 starts discharge of the filament FM after the start of the process of emitting the laser to the lower layer and before the completion of emission of the laser to the entire emission range.

The controller 100 of the three-dimensional fabricating apparatus 1 determines whether the layer formed in step S53 is the outermost layer (step S54). The outermost layer is a layer formed based on image data having the largest coordinate in the lamination direction (Z axis) among the data of the three-dimensional model. If NO in step S54, the controller 100 of the three-dimensional fabricating apparatus 1 repeats the remelting process (step S52) and the layer formation process (step S53) until the outermost layer is formed.

When the formation of the outermost layer is completed (YES in step S54), the three-dimensional fabricating apparatus 1 terminates the fabrication process.

### Variation A of Embodiment>>>

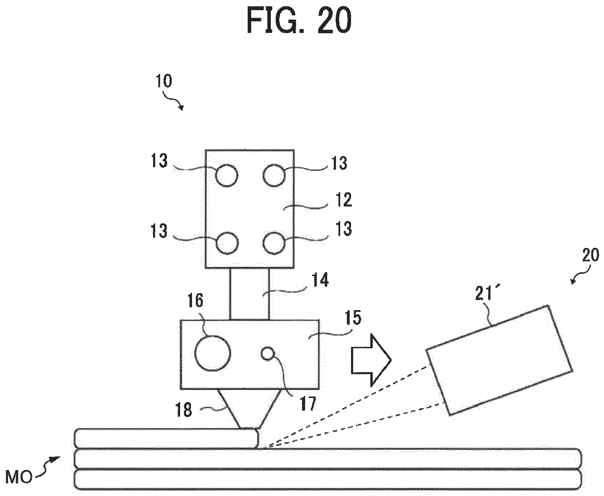

Subsequently, a description is given of a variation A of the above-described embodiment with respect to differences from the above-described embodiment. FIG. 20 is a schematic diagram of the operation of heating a lower layer in the variation A of the above-described embodiment.

In the variation A, the heating module 20 has a hot air source 21'. As the hot air source 21', for example, a heater or a fan may be used. In the variation A of the above-described embodiment, the hot air source 21' blows hot air to a lower layer to heat and remelt the lower layer. Also in the variation A of the above-described embodiment, the filament FM is discharged to the remelted lower layer to form an upper layer. Accordingly, the materials of the lower layer and the upper layer are mixed, thus enhancing the adhesiveness between the upper layer and the lower layer.

### Variation B of Embodiment

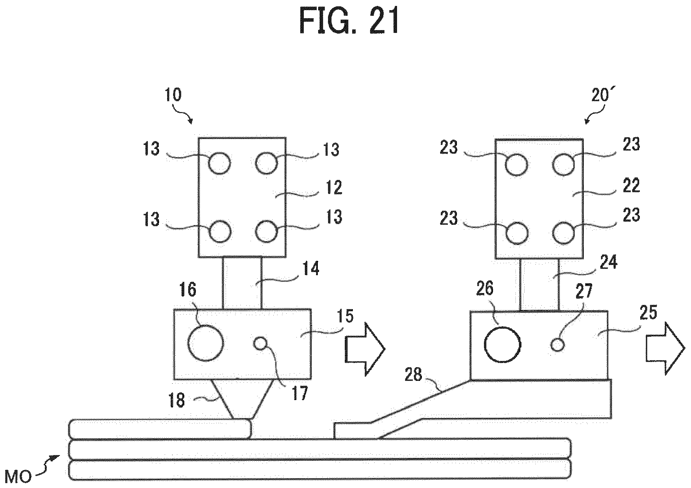

Next, a variation B of the above-described embodiment is described with respect to differences from the above-described embodiment. FIG. 21 is a schematic diagram of the operation of heating a lower layer in the variation B of the above-described embodiment.

In the variation B, the heating module 20 of the three-dimensional fabricating apparatus 1 according to the above-described embodiment is replaced with a heating module 20'. The heating module 20' includes a heating plate 28 to heat and pressurize a lower layer of the three-dimensional fabrication object MO, a heating block 25 to heat the heating plate 28, a cooling block 22 to prevent heat conduction from the heating block 25. The heating block 25 includes a heat source 26, such as a heater, and a thermocouple 27 to control the temperature of the heating plate 28. The cooling block 22 includes a cooling source 23. A guide 24 is provided between the heating block 25 and the cooling block 22.

The heating module 20' is slidably held by a connecting member with respect to the X-axis drive shaft 31 (the X-axis direction) extending in the lateral direction (the horizontal direction in FIG. 1, that is, the X-axis direction) of the three-dimensional fabricating apparatus 1. The heating module 20' is heated to a high temperature by the heating block 25. To reduce the heat transfer from the heating module 20' to the X-axis drive motor 32, a transfer path including, e.g., the filament guide 14 or the guide 24 preferably has low thermal conductivity.

In the heating module 20', a lower end of the heating plate 28 is arranged to be lower by one layer than a lower end of the discharge nozzle 18. While the discharge module 10 and the heating module 20' are scanned in a direction indicated by hollow arrows of FIG. 21, the discharge module 10 discharges the filament and the heating plate 28 reheats a layer below the layer under fabrication. Accordingly, the temperature difference between the layer under fabrication and the layer below the layer under fabrication is reduced and the materials are mixed between the layers, thus enhancing the interlayer strength of the fabrication object. Examples of a method for cooling the heated layer include a method of setting the atmospheric temperature, a method of leaving the heated layer for a predetermined time, a method using a fan, and the like.

According to the variation B, physically mixing the materials between the layers can enhance the adhesion at the interface between the layers. Further, according to the variation B, a lower layer is selectively heated without collapsing the outer shape of the fabrication object and the next discharge is performed while the lower layer is remelted, thus enhancing the adhesion of the interface.

### Variation C of Embodiment

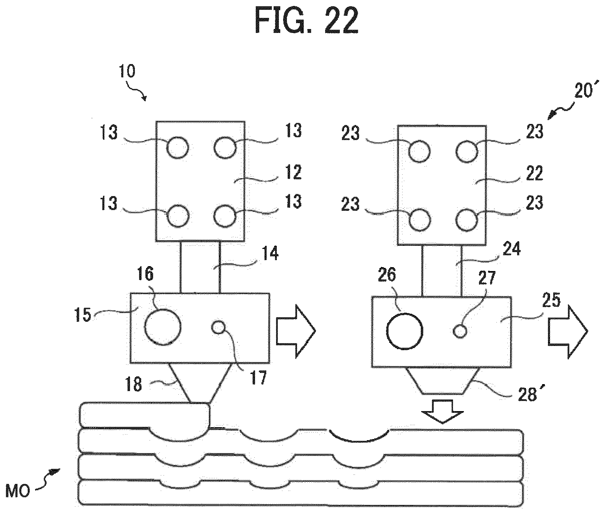

Next, a variation C of the above-described embodiment is described with respect to differences from the variation B of the above-described embodiment. FIG. 22 is a schematic diagram of the operation of heating a lower layer in the variation C of the above-described embodiment.

In the variation C, the heating plate 28 in the heating module 20' is replaced with a tap nozzle 28'. The tap nozzle 28' is heated by the heating block 25. The tap nozzle 28' performs a tapping operation of repeatedly tapping the three-dimensional fabrication object MO from vertically above the three-dimensional fabrication object MO by power of a motor or the like, to heat and pressurize a lower layer in the three-dimensional fabrication object MO. Accordingly, the temperature difference between the layer under fabrication and the layer below the layer under fabrication is reduced and the materials are mixed between the layers, thus enhancing the interlayer strength of the fabrication object. After the tapping operation, the filament FM is discharged from the discharge nozzle 18 to fill the surface of the lower layer dented by the tapping operation. Filling the dented portion of the lower layer with the filament FM smoothly finishes the shape of the outermost surface.

### Variation D of Embodiment

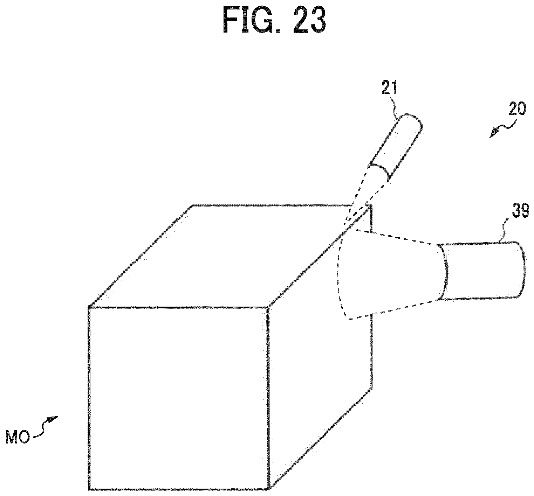

Next, a variation D of the above-described embodiment is described with respect to differences from the above-described embodiment. FIG. 23 is a schematic diagram of the operation of heating a lower layer in the variation D of the above-described embodiment.

In the variation D, the heating module 20 includes a side cooler 39 to cool a side surface, which is a surface parallel to the Z axis, of the three-dimensional fabrication object MO. The side cooler 39 is not limited to a particular type of cooling source and may be any cooling source capable of cooling the side surface of the three-dimensional fabrication object MO. For example, a fan is used as the side cooler 39.

If the outer peripheral portion of the three-dimensional fabrication object MO is reheated without being processed for maintaining the outer shape, the outer shape would collapse and the fabrication accuracy would deteriorate. Hence, in the variation D, the heating module 20 reheats the outer peripheral portion of the three-dimensional fabrication object MO while applying cooling air to the side surface of the three-dimensional fabrication object MO, thus allowing lamination of materials while maintaining the shape of a fabricated portion.

### Variation E of Embodiment

Next, a variation E of the above-described embodiment is described with respect to differences from the above-described embodiment.

When fabrication is performed while heating a lower layer or the fabrication space, the viscosity of a heated portion in the three-dimensional fabrication object MO decreases, which may collapse the outer shape and reduce the fabrication accuracy. By contrast, when fabrication is performed without heating a lower layer or the fabrication space, the viscosity of the three-dimensional fabrication object MO increases, which may hamper the maintenance of the strength in the lamination direction. Hence, in the variation E, a filament having an uneven material composition is used for fabrication.

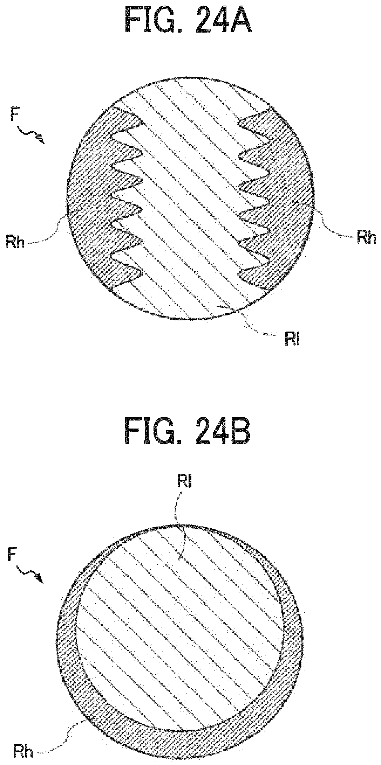

FIGS. 24A and 24B are cross-sectional views of examples of a filament in which the material composition is unevenly distributed. In the example of FIG. 24A, a high viscosity resin Rh is disposed on both sides of the filament F, and a low viscosity resin R1 is disposed in a center portion of the filament F.

The high viscosity resin Rh disposed on both sides of the filament F is not limited to any particular type of resin. For example, a high viscosity resin, such as alumina, carbon black, carbon fiber, or glass fiber, which is made highly viscous by blending a filler, may be used. If the filler inhibits a desired function, a resin having a controlled molecular weight may be used as the high viscosity resin Rh.

The low viscosity resin R1 disposed in the center portion of the filament F is not also limited to any particular type of resin. For example, a resin having a low molecular weight grade is used.

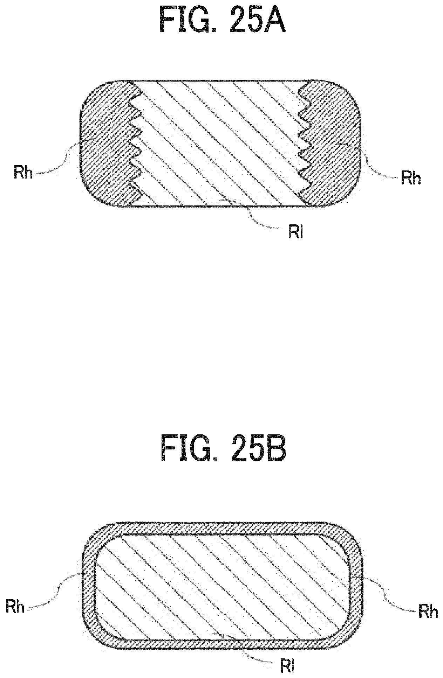

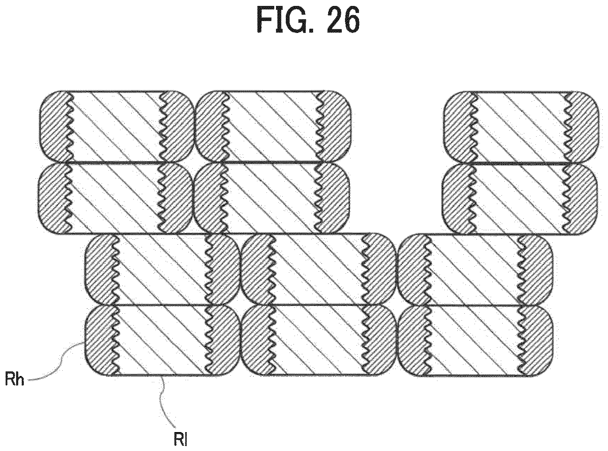

FIGS. 25A and 25B are cross-sectional views of a discharged object of the filament of FIGS. 24A and 24B, respectively. FIG. 26 is a cross-sectional view of a fabrication object to be fabricated using the filament of FIG. 24A. By discharging the filament of FIG. 24A, a discharged object having the shape of FIG. 25A is obtained and the fabrication object of FIG. 26 is obtained. In the fabrication object of FIG. 26, since a high viscosity resin is arranged on the outer peripheral portion, the fabrication object is inevitably unlikely to be collapsed.

FIG. 24B is another example of the filament in which the material composition is unevenly distributed. By discharging the filament of FIG. 24B, a discharged object having the shape of FIG. 25B is obtained. In this way, even if the filament of FIG. 24B is used, the fabrication object is obtained on which a high viscosity resin is arranged at the outer peripheral portion. In addition, from the viewpoint of the manufacturing method, there is also an advantage that the present configuration in which a low viscosity resin is wrapped is easier to make the filament than the configuration in FIG. 25A.

However, when the filament of FIG. 25B is used, a lower part of the layer also has a high viscosity state. A resin with high viscosity often has a higher melting point than a resin with low viscosity. To prevent a melted resin from moving in the horizontal direction when remelting a lower layer at high temperature, it is preferable to avoid heating the outer peripheral portion of the fabrication object. Therefore, as a heating device or heating means, a laser or the like is preferably used that can heat the fabrication object with a small spot.

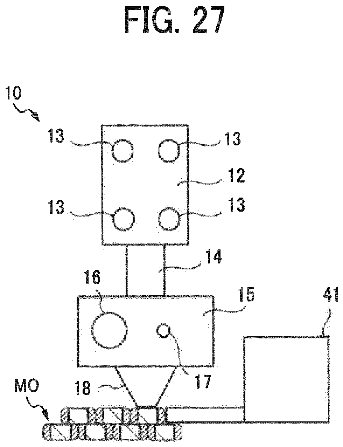

To enhance the adhesion in the lamination direction of the outer peripheral portion, the outer peripheral portion is preferably heated in a state in which the plate directly contacting the fabrication object from a lateral side of the fabrication object. Such heating can restrict the movement of the resin in the horizontal direction due to the viscosity decrease. FIG. 27 is a schematic diagram of an example of the three-dimensional fabricating apparatus having a restricting device as restricting means.

In the example of FIG. 27, the three-dimensional fabricating apparatus 1 is disposed with an assist mechanism 41 as an example of the restricting device. In the fused filament fabrication (FFF) method, the thickness of one layer is about 0.10 to 0.30 mm. Therefore, a plate of the assist mechanism 41 is a thin plate, such as a thickness gauge. The assist mechanism 41 is fixed to the discharge module 10 or a bracket indirectly fixed to the discharge module 10.

It is preferable that the plate of the assist mechanism 41 is heated to a temperature higher than normal temperature. Although depending on a resin used, in the case of a crystalline resin, the resin is quenched when the resin is hit by the plate at normal temperature. Accordingly, amorphization progresses and a desired strength may not be obtained.

Generally, viscosity is expressed as a function of temperature and shear rate. Engineering plastic or super engineering plastic etc. used in the FFF method exhibits nonlinear behavior with respect to a variable, such as temperature or shear rate. Accordingly, even if it is not higher than the melting point Tm of the resin, the shear resistance, that is, the viscosity of the resin necessary in the FFF method may be obtained. On the other hand, if the viscosity at a desired shear rate (S. Rate) is too low in an area higher than the Tm, there may occur problems, such as a liquid drip from the nozzle, an insufficient retraction in the filament retraction (retracting motion), an associated short shot at the initial discharge, the collapse of the fabrication object.

When the resin is at a predetermined temperature equal to or higher than Tm, generally, the resin has a highest viscosity at the temperature at the time of S. Rate = 0, that is, non-discharge operation. If the liquid drips even in such a state, compositing of the resin by a filler can be an effective means for preventing the dripping. By adding a filler to the resin and controlling the compounding ratio or the particle size, fiber length distribution etc. of the compound to be blended, thixotropy at melting is imparted. Such a configuration prevents the liquid from dripping at non-discharge operation and causes the liquid to be in a state of low viscosity at discharge operation.

The method of adding a filler to the filament is also preferable to prevent the fabrication object from easily collapsing with an increase in the temperature of the lower layer. If the fabrication accuracy cannot be maintained even with the addition of the filler, it is preferable to regulate a lateral side of the fabrication object.

### Variation F of Embodiment

Next, a variation F of the above-described embodiment is described with respect to differences from the above-described variation E.

In the case of using a filament in which the material composition is unevenly distributed, it is preferable to regulate the direction in which the filament is introduced into the discharge module 10 so that the high viscosity resin Rh is arranged on the outer peripheral portion of the fabrication object.

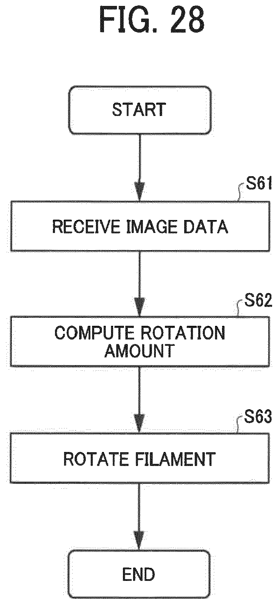

FIG. 28 is a flowchart of an example of a process of regulating the direction of the filament. The image pickup module 101 of the three-dimensional fabricating apparatus 1 captures an image of the filament introduced into the discharge module 10, and transmits the obtained image data to the controller 100.

The controller 100 receives the image data of the filament transmitted by the image pickup module 101 (step S61). The controller 100 analyzes the image data of the received filament and calculates the rotation amount (step S62). There is no particular limitation on the method of calculating the rotation amount. For example, a method is used of determining the rotation amount such that the boundary between the high viscosity resin Rh and the low viscosity resin R1 in the filament F is at a predetermined position. For example, in the case of discharging the filament while moving the discharge module 10 in the X-axis direction, the high viscosity resin Rh in the filament is unevenly distributed in the positive and negative directions of the Y-axis. Thus, the high viscosity resin is arranged at an outermost portion of the fabrication object. Therefore, the controller 100 determines the rotation amount of the filament so that the high viscosity resin Rh is unevenly distributed in the positive and negative directions of the Y axis.

Based on the determined rotation amount, the controller 100 transmits a signal for rotating the filament to the torsional rotation assembly 102. The torsional rotation assembly 102 rotates the filament based on the signal (step S63). As a result, the filament is regulated in a desired direction.

When a high viscosity resin is disposed on the outside of the filament, the flow velocity on the wall side of the filament becomes extremely slow in the transfer path and the high viscosity resin stays, thus hampering discharge of the filament in a desired arrangement. Therefore, in a region downstream from the heating block 25, that is, in a region to which a temperature equal to or higher than the melting point is applied, the inner wall of the transfer path is preferably processed with fluorine or the like having high heat resistance. By forming the release layer in the transfer path, the frictional resistance between the melted resin and the inner wall of the transfer path decreases, and the stay of the high viscosity resin is unlikely to occur.

In consideration of a time lag of the conveyance in a section from the torsional rotation assembly 102 to the discharge nozzle 18, the controller 100 preferably performs feedforward control to prevent control delay. For example, the controller 100 controls driving of the torsional rotation assembly 102 so that the direction of the filament is switched at the timing when the movement direction of the discharge module 10 is turned. Also, when advancing the discharge module 10 along a curved line, the controller 100 controls driving of the torsional rotation assembly 102 stepwise in consideration of time lag.

If the filament is extremely twisted, the filament might be entangled in the route from the reel 4 to the introduction part of the discharge module 10. It would be very troublesome for a user to unravel the entanglement. Therefore, a guide tube is preferably introduced from the reel 4 to the introduction portion. However, if the filament is extremely twisted, the frictional resistance between the guide tube and the filament would increase and the filament may not be normally introduced. In addition, the filament may be scraped at an orifice portion having a narrow inner diameter, such as a joint of the guide tube. In a reinforced filament or the like in which a filler is blended, the flexibility peculiar to resin is often lost. When such a filament is subjected to a torsional load, the filament may be broken, thus hampering normal fabrication.

Therefore, the controller 100 preferably regulates the cumulative twist amount of the filament, for example, in a range from a reference angle to ±180°.

Further, instead of the mechanism for rotating the filament, a mechanism capable of rotating the entire discharge module 10 may be used so that the resin is arranged in a desired state in the discharged object, for example, as illustrated in FIGS. 25A and25B. In such a case, the thermocouple 17 for controlling the heat source 16, the wiring of the heat source 16 itself, the wiring of the cooling source 13, and a plurality of wiring systems of an overheat protector and so on are also simultaneously rotated. Therefore, the mechanism of rotating the entire discharge module 10 would be more complicated than the mechanism of rotating the filament from the viewpoint of wiring.

### Variation G of embodiment

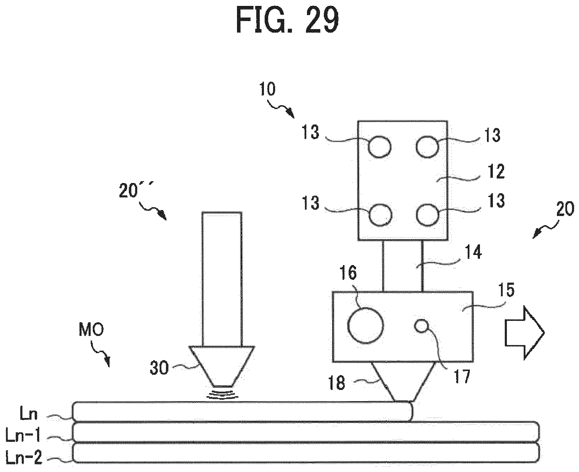

Subsequently, a description is given of a variation G of the above-described embodiment with respect to differences from the above-described embodiment. FIG. 29 is a schematic diagram of fabrication and surface treatment operation in one embodiment.

In the variation G, the three-dimensional fabricating apparatus 1 includes a heating module 20". The heating module 20" includes a horn 30 to heat and pressurize the three-dimensional fabrication object MO. The three-dimensional fabricating apparatus 1 includes an ultrasonic vibration device. The horn 30 moves downward from above the lamination surface of the three-dimensional fabrication object MO by the Z-axis drive motor, and applies pressure to the lamination surface. Thus, the vibration of an ultrasonic wave generated by the ultrasonic vibration device is transmitted to the three-dimensional fabrication object MO. When the ultrasonic vibration is transmitted to the three-dimensional fabrication object MO, the upper layer Ln and the lower layer Ln-1 of the three-dimensional fabrication object MO are welded and joined. In the three-dimensional fabricating apparatus 1, the number of the horn 30 is not limited to one, and is appropriately selected. In the case in which a plurality of horns 30 is disposed, the shape of the horn need not be unified, and horns of different shapes may be mounted.

### EXAMPLES

In the following examples and comparative examples, the maximum tensile strength of a fabrication object formed by the three-dimensional fabricating apparatus 1 is measured. Note that Autograph AGS-5 kNX (manufactured by Shimadzu Corporation) was used for measuring the maximum tensile strength of the fabrication object.

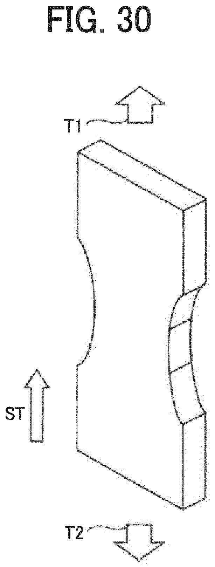

FIG. 30 illustrates the shape of a fabrication object in Examples and Comparative Examples. The fabrication object conforms to ASTM (American Society for Testing Materials) D638-02a Type-V. Using the three-dimensional fabricating apparatus 1, a fabrication material was laminated on the fabricating table 3 in a vertically-upward direction ST illustrated in FIG. 30, and a tensile test piece in which layers were laminated in a longitudinal direction as illustrated in FIG. 30 was formed. The maximum tensile strength profile of the fabrication object was obtained by chucking a lamination bottom surface and a lamination top surface in the tensile test piece and pulling the tensile test piece in the directions indicated by T1 and T2 in FIG. 30 at 200 mm / min.

### Comparative Example 1

In comparative examples, a tensile test piece is formed without executing the remelting operation (step S52) using the three-dimensional fabricating apparatus 1. In Comparative Example 1, a thermally-soluble resin is used as a filament being a fabrication material. For the introduction part of the discharge module 10, a pair of rollers made of stainless steel (SUS) 304 of ϕ12 was used. The dimensional shape of the transfer path of the discharge module 10 was a bar shape having a circular cross section. The discharge nozzle 18 at the tip of the discharge module 10 was made of brass and the opening diameter of the tip was 0.5 mm. The part to be the transfer path was made to be a cavity of ϕ2.5 mm. The cooling block 22 was made of SUS 304. The cooling block 22 was passed through by a water cooling pipe and connected to a chiller. The set temperature of the chiller was 10°C. Similarly with the cooling block 22, the heating block 25 was also made of SUS 304. A cartridge heater serving as the heat source 26 was passed through the heating block 25, and the thermocouple 27 was disposed on the side symmetrical to the filament to control the temperature. The set temperature of the cartridge heater was set to be equal to or higher than the melting temperature of the resin. A tensile test piece as illustrated in FIG. 30 was molded with a scanning speed of the discharge nozzle 18 during fabrication set at 10 mm / sec. In addition, the fabricating table 3 is set to a temperature range within which the discharge material can adhere to the fabricating table 3. The thickness of one layer in the Z-axis direction as the resolution in the lamination direction of the fabrication object was 0.25 mm.

### Comparative Example 2

In Comparative Example 2, a thermally-soluble resin is used as a filament being a fabrication material. For the introduction part of the discharge module 10, a pair of rollers made of stainless steel (SUS) 304 of ϕ12 was used. The dimensional shape of the transfer path of the discharge module 10 was a bar shape having a circular cross section. The discharge nozzle 18 at the tip of the discharge module 10 was made of brass and the opening diameter of the tip was 0.5 mm. The part to be the transfer path was made to be a cavity of ϕ2.5 mm. The cooling block 22 was made of SUS 304. The cooling block 22 was passed through by a water cooling pipe and connected to a chiller. The set temperature of the chiller was 10°C. Similarly with the cooling block 22, the heating block 25 was also made of SUS 304. A cartridge heater serving as the heat source 26 was passed through the heating block 25, and the thermocouple 27 was disposed on the side symmetrical to the filament to control the temperature. The set temperature of the cartridge heater was set to be equal to or higher than the melting temperature of the resin. A tensile test piece as illustrated in FIG. 30 was molded with a scanning speed of the discharge nozzle 18 during fabrication set at 50 mm / sec. In addition, the fabricating table 3 is set to a temperature range within which the discharge material can adhere to the fabricating table 3. The thickness of one layer in the Z-axis direction as the resolution in the lamination direction of the fabrication object was 0.25 mm.

### Example 1

In Example 1, a tensile test piece was fabricated using the three-dimensional fabricating apparatus 1 including the heating module 20 at the same setting (image data to be used, temperature, and scanning speed) as in Comparative Example 1. At this time, after the lower layer is cooled, the heat transfer calculator 701 calculates the heating data necessary for reheating the lower layer based on the various types of input information. The heat transfer calculator 701 outputs the calculated heating data to the heating controller 702. The heating controller 702 controls the heating source 703 to reheat the lower layer based on the received data, thus allowing enhancement of the strength of the lamination interface. The process of reheating the filament to a temperature higher than the glass transition point to form the upper layer was repeated.

### Example 2

In Example 2, a tensile test piece was fabricated using the three-dimensional fabricating apparatus 1 including the heating module 20 at the same settings (image data to be used, temperature, and scanning speed) as in Comparative Example 2. At this time, after the lower layer is cooled, the heat transfer calculator 701 calculates the heating data necessary for reheating the lower layer based on the various types of input information. The heat transfer calculator 701 outputs the calculated heating data to the heating controller 702. The heating controller 702 controls the heating source 703 based on the received data to reheat the lower layer, thus allowing enhancement of the strength of the lamination interface. The process of reheating the filament to a temperature higher than the glass transition point to form the upper layer was repeated.

In any of Examples 1 and 2, the maximum tensile strength greater than the maximum tensile strength of each of Comparative Examples 1 and 2 was obtained. In addition, the generation of deterioration (burn) of the material was able to be restrained. From the above, it is understood that the strength in the lamination direction of the three-dimensional fabrication object can be increased by the three-dimensional fabricating apparatus 1 having the configuration of the above-described embodiment and the generation of deterioration (burn) of the material was able to be restrained.

### Effects of embodiment

The discharge module 10 (an example of a discharge device or discharge means) of the three-dimensional fabricating apparatus 1 (an example of a fabricating apparatus) of the above-described embodiment discharges a melted filament (an example of a fabrication material) to form a fabrication material layer. The heating module 20 (an example of a heating device or heating means) of the three-dimensional fabricating apparatus 1 heats the formed building material layer. The discharge module 10 discharges the melted filament to the heated fabrication material layer, to laminate fabrication material layers for fabrication. According to the above-described embodiment, the filament is discharged to a melted fabrication material layer (lower layer) to laminate a fabrication material layer (upper layer) on the melted fabrication material layer. Accordingly, materials between layers mix together, thus allowing enhancement of the strength in the lamination direction of the fabrication object. The heat transfer calculator 701 calculates the heating data necessary for reheating the lower layer based on the input information and transmits the heating data to the heating controller 702. Accordingly, the heating controller 702 can control the heating source 703 based on the received data to reheat the lower layer, thus restraining the occurrence of material alteration (burning) and enhancing the strength of the lamination interface. Further, the process of laminating the upper layer allows fabrication to be performed without affecting the fabrication accuracy of the outer shape.

The heating module 20 of the three-dimensional fabricating apparatus 1 selectively heats a predetermined region of the fabrication material layer. Thus, fabrication can be performed while maintaining the shape of the fabrication object.

The rotary stage RS (an example of a conveyor or conveying means) of the three-dimensional fabricating apparatus 1 conveys the heating module 20 so that a predetermined position can be heated from different directions. Thus, the heating module 20 can heat the fabrication material layer following the movement of the discharge module 10.

The three-dimensional fabricating apparatus 1 includes the temperature sensor 104 (an example of a measuring device or measuring means) to measure the temperature of a fabrication material layer heated by the heating module 20. The heating module 20 heats the fabrication material layer according to the temperature measured by the temperature sensor 104. Thus, the three-dimensional fabricating apparatus 1 can appropriately reheat the fabrication material layer according to desired characteristics, such as interlayer adhesion strength or fabrication accuracy.

The heating module 20 may be a laser source 21 (an example of an emitter) that emits laser light. Thus, the heating module 20 can selectively heat the fabrication object without contacting the fabrication object.

The heating module 20 may be a hot air source (an example of an air blower or blowing means) for blowing heated air. Thus, the heating module 20 can selectively heat the fabrication object without contacting the fabrication object.

The heating module 20' may be the heating plate 28 or the tap nozzle 28' (an example of a member of the heating module 20') to contact and heat the fabrication material layer. Thus, the heating module 20' can selectively heat the fabrication object.

The three-dimensional fabricating apparatus 1 may include a plurality of heating modules 20. Thus, even if the scanning direction of the discharge module 10 is changed, at least one of the heating modules 20 can heat the fabrication object, thus shortening the fabrication time.

The side cooler 39 (an example of a cooler or cooling means) of the three-dimensional fabricating apparatus 1 cools the outer peripheral portion of the fabrication object formed of the fabrication material. Thus, the three-dimensional fabricating apparatus 1 can fabricate the fabrication object while maintaining the shape of the fabrication object.

A plurality of materials having different viscosities is arranged in the filament. Thus, under the control of the controller 100, the discharge module 10 can discharge the filament so that a material having a lower viscosity is disposed at the outer peripheral portion.

The assist mechanism 41 (an example of a supporter) of the three-dimensional fabricating apparatus 1 supports the formed fabrication material layer. Thus, the three-dimensional fabricating apparatus 1 can fabricate the fabrication object while maintaining the shape of the formed fabrication material layer.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, personal digital assistant, mobile telephone (such as a WAP or 3G-compliant phone) and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a TCP/IP signal carrying computer code over an IP network, such as the Internet. The carrier medium may also include a storage medium for storing processor readable code such as a floppy disk, hard disk, CD ROM, magnetic tape device or solid state memory device.

## Claims

1. A fabricating apparatus (1) comprising:
temperature measuring means (104) for measuring a temperature of a fabrication material layer;
heating means (20) for heating the fabrication material layer; and
heating controlling means (702) for controlling the heating means (20) with a heating amount for heating the fabricating material layer to a temperature at which the fabricating material layer melts, based on the temperature measured by the temperature measuring means.

2. The fabricating apparatus (1) according to claim 1,
wherein the temperature measuring means (104) includes at least one of a thermography (104a), a radiation thermometer, and a thermocouple (104b).

3. The fabricating apparatus (1) according to claim 1 or 2, further comprising a plurality of temperature measuring means (104) including the temperature measuring means (104).

4. The fabricating apparatus (1) according to any one of claims 1 to 3, further comprising calculating means (701) for calculating the heating amount,
wherein the calculating means (701) calculates the heating amount based on a shape of a fabrication object to be fabricated.

5. The fabricating apparatus (1) according to claim 4,
wherein the calculating means (701) calculates the heating amount according to a position of the fabrication object during fabrication.

6. The fabricating apparatus (1) according to claim 4 or 5,
wherein the calculating means (701) calculates the heating amount every time one fabrication material layer is formed.

7. The fabricating apparatus (1) according to any one of claims 4 to 6,
wherein the calculating means (701) calculates the heating amount based on a temperature of the heating means (20).

8. The fabricating apparatus (1) according to any one of claims 1 to 7, further comprising discharging means (10) for discharging a fabrication material to form the fabrication material layer,
wherein the temperature measuring means (104) measures a temperature at a position downstream, in a traveling direction of the discharging means (10), from a position onto which the discharging means (10) is about to discharge the fabricating material.

9. A system comprising the fabricating apparatus (1) according to any one of claims 1 to 8.

10. A fabricating method comprising:
measuring (S12) a temperature of a fabrication material layer; and
controlling (S13 to S17) heating means with a heating amount for heating the fabrication material layer to a temperature at which the fabrication material layer melts, based on the temperature measured by the measuring (S12).

11. A computer readable program for controlling a fabricating apparatus to carry out the fabricating method of claim 10.
